# NEUE EUROPÄISCHE PATENTSCHRIFT

(11) **EP 0 674 055 B2**
(45) Veröffentlichungstag und Bekanntmachung des Hinweises auf die Entscheidung über den Einspruch: **31.07.2002**
(45) Hinweis auf die Patenterteilung: 24.02.1999
(21) Anmeldenummer: 94119384.9
(22) Anmeldetag: 08.12.1994
(51) Int. Cl.: E03C 1/33

(54) **Vorrichtung zum Befestigen eines Küchen-Einbauteiles**
Device for fastening a built-in kitchen element
Dispositif de fixation d'un élément de cuisine encastrable

(30) Priorität: 26.03.1994 DE 9405197 U
(43) Veröffentlichungstag der Anmeldung: 27.09.1995
(73) Patentinhaber: NIRO-PLAN AG, CH-6300 Zug (CH)
(72) Erfinder: Ris, Max c/o Franke AG, CH-4663 Aarburg (CH)
(74) Vertreter: Brommer, Hans Joachim, Dr.-Ing.

(56) Entgegenhaltungen:
- EP-A- 0 271 705
- GB-A- 2 108 195
- GB-A- 2 241 980
- US-A- 2 679 052
- US-A- 2 925 609
- US-A- 3 386 108

## Beschreibung

Die Erfindung betrifft eine Vorrichtung zum Befestigen eines Küchen-Einbauteiles, insbesondere einer Spüle, in der Einbauöffnung einer Tragplatte, mit einer am Einbauteil befestigten Halteleiste und einem Befestigungsglied, wobei das Einbauteil mit seinem äußeren Umfang auf der Plattenoberseite oder einem vertieften Absatz der Platte aufliegt und mit der nach unten vorstehenden Halteleiste in die Einbauöffnung hineinragt, und wobei das Befestigungsglied von unten auf die Halteleiste aufsteckbar und an einer etwa horizontale Stützfläche der Halieleiste zu verrasten ist und mittels einer die Platten-Unterseite übergreifenden und ihr gegenüber verspannbaren Kralle die Befestigung des Einbauteiles in der Platte bewirkt.

Derartige Befestigungsvorrichtungen sind in vielen verschiedenen Bauformen bekannt. Sie haben die Aufgabe, das Küchen-Einbauteil, insbesondere also eine Spüle oder eine Herdmulde, in von oben nicht sichtbarer Weise in der Tischplatte zu befestigen. Dabei muß der äußere Umfang des Einbauteiles dicht gegen die Tischplattenoberseite gepreßt werden, damit keine Feuchtigkeit zu der unbeschichteten und daher ungeschützten Stimseite der Einbauöffnung gelangen kann.

Allerdings ist die Unterseite der Tischplatte schlecht zugänglich, weshalb herstellerseitig angestrebt wird, das Positionieren der Befestigungsglieder und ihr Verspannen an der Tischplattenunterseite so leicht wie möglich zu gestalten.

Befestigungsvorrichtungen mit den eingangs genannten Merkmalen sind durch die DE-A- 31 27 894, DE-A- 29 38 135 und DE-U- 1 975 190 bekannt. Dabei weist die nach unten ragende Halteleiste des Einbauteiles jeweils eine Vielzahl nebeneinanderliegender Fenster auf, in welche die Befestigungsglieder eingeklippst werden können. Dies hat den Vorteil, daß das Einbauteil zunächst ohne die Befestigungsglieder in die Einbauöffnung der Tragplatte eingesetzt und ausgerichtet werden kann. Allerdings können die Befestigungsglieder aufgrund der vorgegebenen Position der Fenster nicht mehr beliebig positioniert werden.

Bei anderen Konstruktionen, wie sie durch die DE-A- 20 63 447, DE-A- 22 39 974 und DE-A- 31 42 016 bekannt sind, wird die Befestigungsvorrichtung nicht in Öffnungen der Halteleiste eingeklippst, sondem die Halteleiste weist eine winkelige Abbiegung auf, an der die Befestigungsvorrichtung verschiebbar geführt ist. Dadurch ist man zwar in der Wahl der Befestigungsposition frei, die Befestigungsvorrichtungen müssen aber seitlicn am Ende der Halteleiste aufgefädelt und dann in die richtige Position geschoben werden, was relativ umständlich ist.

Aus der US-A 3,386,108 ist schließlich noch eine Befestigungsvorrichtung für Spülen bekannt, wobei nicht die Spüle selbst die Halteleiste trägt, sondern ein separater Einbaurahmen vorgesehen ist, der sowohl die Spüle als auch die Arbeitsplatte übergreift. Die an dem Einbaurahmen angeordnete Halteleiste ist unten etwa U-förmig abgewinkelt und wird in diesem Bereich von dem Befestigungsglied beaufschlagt, welches den Einbaurahmen mit der Halteleiste an der Platte verspannt und gleichzeitig das Einbauteil gegen den Einbaurahmen festlegt. Der Druckschrift sind zwar keine Informationen darüber zu entnehmen, wie im Detail das Befestigungsglied auf die Halteleiste aufgesteckt wird; es scheint jedoch offensichtlich, dass - wie schon bei den zuvor genannten Schriften - ein Auffädeln vom seitlichen Ende der Halteleiste her oder aber ein Auffädeln des zuvor in die Horizontale verschwenkten Befestigungsgliedes erforderlich ist.

Hiervon ausgehend liegt die Aufgabe der vorliegenden Erfindung darin, eine Befestigungsvorrichtung mit den eingangs beschriesenen Merkmalen dahingehend zu verbessern, daß man einerseits in der Positionierung der Befestigungsglieder frei ist, also nicht auf vorgegebene Positionen angewiesen ist und daß man andererseits die Befestigungsglieder leichter als bisher mit der Halteleiste verbinden kann.

Diese Aufgabe wird durch eine Vorrichtung mit den Merkmalen des Patentanspruches 1 gelöst.

Dadurch wird die Möglichkeit geschaffen, das Befestigungsglied unmittelbar in der gewünschten Position an der Halteleiste des Einbauteiles anzubringen, und zwar durch einfaches Aufstecken von unten und anschließendes Verrasten. Das bisher notwendige, umständliche Auffädeln vom Ende der Halteleiste her erübrigt sich.

Damit sich zwischen Befestigungsglied und Halteleiste eine stabile Verbindung ergibt, empfiehlt es sich, daß das Befestigungsglied an seiner mit der Halteleiste in Eingriff gelangenden Seite einen hakenförmigen Vorsprung aufweist, der die genannte Stützfläche hintergreift. Auf diese Weise ist eine starke Verspannung des Einbauteiles relativ zu seiner Tragplatte möglich, weil sich die Spannkräfte nicht auf den elastig nachgiebigen Bereich des Befestigungsgliedes auswirken.

Des weiteren empfiehlt es sich, daß der hakenartige Vorsprung an seinem oberen Ende nach außen läuft. Dadurch wird das Aufstecken des Befestigungsgliedes auf die U-förmige Leiste erleichtert, indem die elastische Aufweitung des Befestigungsgliedes allmählich erfolgt.

Besonders zweckmäßig ist es, wenn das Befestigungsglied an seiner mit der Halteleiste in Eingriff gelangenden Seite relativ starr ausgebildet ist und die Kralle mit ihrer Befestigungsschraube trägt, während die gegenüberliegende Seite als nach oben ragende federnde Leiste ausgebildet ist. Dadurch kann der starre, für die Verspannung maßgebende Bereich des Befestigungsgliedes funktionsmäßig getrennt werden von dem gegenüberliegenden Bereich, der nur für die elastische Schnappverbindung verantwortlich ist.

Weitere Merkmale und Vorteile der Erfindung ergeben sich aus der nachfolgenden Beschreibung eines Ausführungsbeispieles anhand der Zeichnung; dabei zeigt
- Figur 1: einen Querschnitt durch die Einbauöffnung der Tragplatte mit Einbauteil und

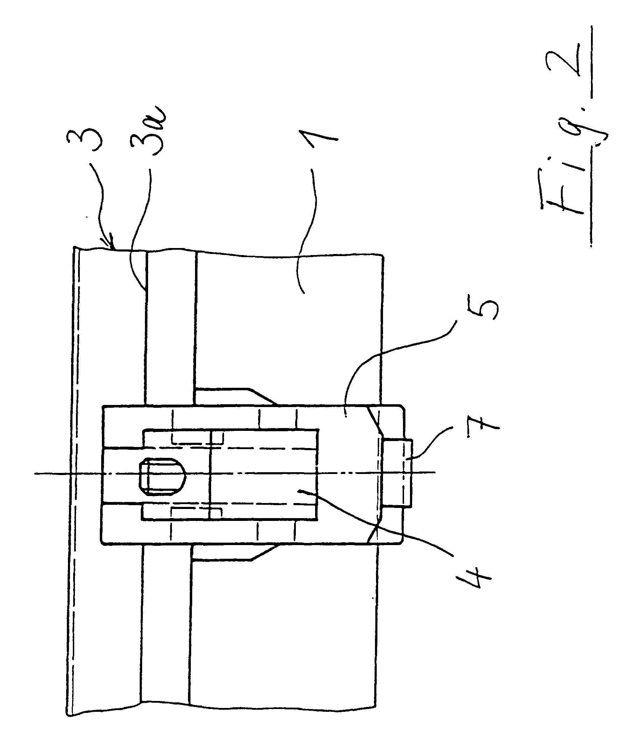

- Figur 2: eine um 90° geklappte Ansicht bei abgenommenem Einbauteil

Eine Tragplatte 1, die an ihrer Oberseite die übliche Beschichtung 1a aufweist, hat im gewünschten Einbaubereich eines Küchen-Einbauteiles, im Ausführungsbeispiel einer Spüle 2, eine durch Aussägen hergestellte, zur Kontur der Spüle passende E inbauöffnung 1b.

Die Spüle 2 wird derart in diese Einbauöffnung eingesetzt, daß sie mit ihrem umlaufenden äußeren Rand 2a auf der Arbeitsplatte 1 aufliegt, während eine an der Spülenunterseite angeschweißte, in Umfangsrichtung umlaufende Halteleiste 3 in die Einbauöffnung hineinragt.

Die Halteleiste 3 läuft etwa 2 cm vertikal nach unten und ist dann nach innen und oben abgebogen, so daß sie in Form eines U ausläuft. Ihr freies Ende 3a fungiert als Stützfläche für ein Befestigungsglied 4.

Das Befestigungsglied 4 besteht im wesentlichen aus zwei Bereichen, einem innenliegenden, relativ starren Bereich 4a und einem außenliegenden, relativ elastischem Bereich 4b. Der Bereich 4a trägt zum einen eine nach unten ragende, die Unterseite der Arbeitsplatte 1 übergreifende, höhenverstellbare Spannkralle 5, zum anderen eine vertikal angeordnete Gewindehülse 6. In die Gewindehülse 6 ist eine Spannschraube 7 einschraubbar, die eine Öffnung der Spannkralle 5 durchquert und mit ihrem Kopf gegen die Spannkralle drückt.

Außerdem tragt der Bereich 4a oben einen oder mehrere nach außen gerichtete hakenartige Vorsprünge 8, die die Stützfläche 3a der Halteleiste 3 übergreifen und damit das Befestigungsglied 4 in Vertikalrichtung halten.

Der außenliegende Bereich 4b besteht im wesentlichen aus einer nach oben rägenden federnden Leiste 9, die an der Außenseite der Halteleiste 3, also an der der Abwinkelung abgewandten Seite, anliegt und dafür sorgt, daß die hakenartigen Vorsprünge 8 nicht aus ihrem Eingriff mit der Halteleiste 3 herausrutschen. Zu diesem Zweck bildet die Leiste 9 mit dem gegenüberliegenden Bereich des Befestigungsgliedes 4 einen nach oben offenen Schlitz 10, der auf die U-förmige Abwinkelung der Halteleiste 3 aufgeschoben werden kann. Dabei wird die federnde Leiste 9 elastisch nach außen gedrückt, bis die hakenartigen Vorsprünge 8 über die Stützfläche 3a hinwegschnappen, worauf das Befestigungsglied 4 in der gezeichneten Position mit der Halteleiste verrastet ist. Die Seitenteile des Schlitzes 10 legen sich dabei bündig an beide Außenseiten der U-förmigen Abwinkelung und bewirken eine stabile Fixierung, und die hakenartigen Vorsprünge 8 können mit ihrem in den Schlitz vorspringenden Ende in Anlage kommen mit der nicht abgewinkelten Innenseite der Halteleiste 3. Anschließend wird die Schraube 7 angezogen, wodurch die Kralle 5 den Spülbeckenrand 2a gegen die Tragplatte 1 verspannt.

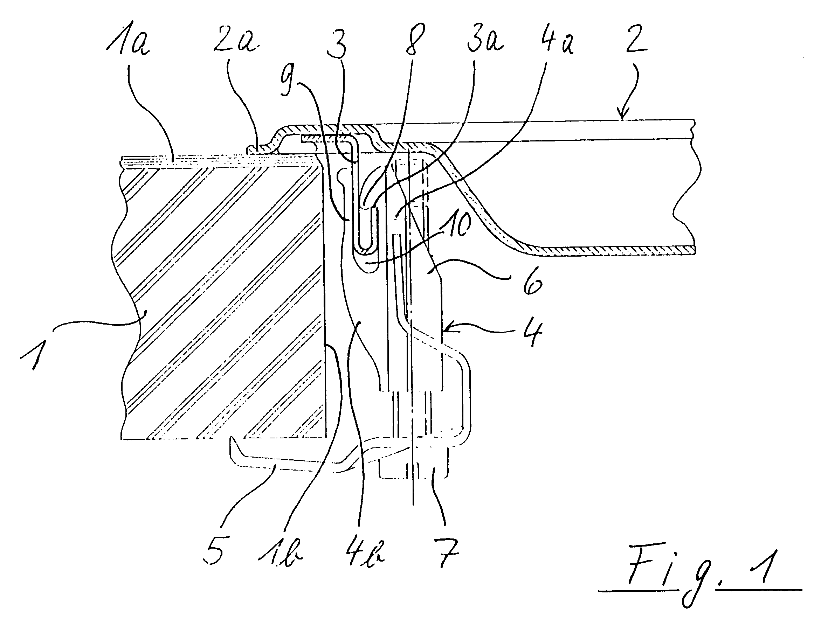

Wie aus Figur 1 deutlich wird, kann das Befestigungsglied 4 problemlos an jeder gewünschten Umfangsstelle durch einfaches Aufklipsen an der Halteleiste 3 verhakt werden. Man erhält dadurch eine leicht handhabbare und optimal positionierbare Befestigungsvorrichtung für das Einbauteil.

## Patentansprüche

1. Vorrichtung zum Befestigen eines Küchen-Einbauteiles (2), insbesondere einer Spüle, in der Einbauöffnung (1b) einer Tragplatte (1), mit einer am Einbauteil befestigten Halteleiste (3) und einem Befestigungsglied (4), wobei das Einbauteil (2) mit seinem äußeren Umfang auf der Plattenoberseite oder einem vertieften Absatz der Platte aufliegt und mit der nach unten vorstehenden Halteleiste (3) in die Einbauöffnung (1b) hineinragt, und wobei das Befestigungsglied (4) von unten auf die Halteleiste (3) aufsteckbar und an einer etwa horizontalen Stützfläche (3a) der Halteleiste zu verrasten ist und mittels einer die Platten-Unterseite übergreifenden und ihr gegenüber verspannbaren Kralle (5) die Befestigung des Einbauteiles (2) in der Platte (1) bewirkt,
**dadurch gekennzeichnet,**
**dass** die Halteleiste (3) unten etwa U-förmig abgewinkelt ist und an ihrem abgewinkelten Ende die Stützfläche (3a) aufweist, dass das Befestigungsglied (4) einen nach oben offenen Schlitz (10) aufweist, der auf die U-förmige Abwinkelung der Halteleiste (3) aufschiebbar ist, und das Befestigungsglied die etwa U-förmige Abwinkelung beidseits umfasst derart, dass sich die Seitenteile des Schlitzes (10) an beide Außenseiten der U-förmigen Abwinkelung anlegen und eine stabile Fixierung bewirken, und dass das Befestigungsglied zumindest an der einen Seite der U-förmigen Abwinkelung elastisch nachgiebig ausgebildet ist.

2. Vorrichtung nach Anspruch 1
**dadurch gekennzeichnet,**
**dass** das Befestigungsglied (4) an seiner mit der Halteleiste (3) in Eingriff gelangenden Seite einen hakenförmigen Vorsprung (8) aufweist.

3. Vorrichtung nach Anspruch 2,
**dadurch gekennzeichnet,**
**daß** der hakenförmige Vorsprung (8) die genannte Stützfläche (3a) hintergreift.

4. Vorrichtung nach Anspruch 2,
**dadurch gekennzeichnet,**
**daß** der hakenförmige Vorsprung (8) an seinem oberen Ende von der Halteleiste (3) wegläuft.

5. Vorrichtung nach Anspruch 1,
**dadurch gekennzeichnet,**
**daß** das Befestigungselement (4) an seiner mit der Halteleiste (3) in Eingriff gelangenden Seite relativ starr ausgebildet ist und die Kralle (5) sowie eine festigungsschraube (7) trägt.

6. Vorrichtung nach Anspruch 2,
**dadurch gekennzeichnet,**
**daß** das Befestigungselement (4) an seiner dem hakenförmigen Vorsprung (8) gegenüberliegenden Seite eine nach oben ragende federnde Leiste (9) aufweist und die Halteleiste (3) zwischen dem hakenartigen Vorsprung (8) und der federnden Leiste (9) einrastbar ist.

7. Vorrichtung nach Anspruch 1,
**dadurch gekennzeichnet,**
**daß** das Befestigungselement (4) längs der Halteleiste (3) verschiebbar ist.

## Claims

1. Device for securing a built-in kitchen component (2), especially a sink, in the installation opening (1b) of a supporting panel (1), the device having a holding rib (3), which is affixed to the built-in component, and a fastening member (4), wherein the built-in component (2) rests by its outer periphery on the upper side of the panel, or on a recessed shoulder of the panel, and its downwardly projecting holding rib (3) projects into the installation opening (1b), and the fastening member (4) is arranged to be slipped onto the holding rib (3) from below and locked against an approximately horizontal support face (3a) of the holding rib and effects the securing of the built-in component (2) in the panel (1) by means of a claw (5) that engages the underside of the panel and can be clamped relative thereto,
**characterised in that**
the holding rib (3) is bent at the bottom into an approximate U-shape and has the support face (3a) on its bent end; the fastening member (4) has a slot (10) which is open towards the top and can be pushed over the U-shaped bent portion of the holding rib (3); and the fastening member encompasses the approximately U-shaped bent portion on both sides in such a manner that the side portions of the slot (10) come to rest against the two outer sides of the U-shaped bent portion and effect stable fixing; and the fastening member is constructed to yield resiliently at least on one side of the U-shaped bent portion.

2. Device according to claim 1,
**characterised in that**
the fastening member (4) has a hook-shaped projection (8) on its side entering into engagement with the holding rib (3).

3. Device according to claim 2,
**characterised in that**
the hook-shaped projection (8) engages behind the said support face (3a).

4. Device according to claim 2,
**characterised in that**
the hook-shaped projection (8) extends away from the holding rib (3) at its upper end.

5. Device according to claim 1,
**characterised in that**
the fastening element (4), on its side entering into engagement with the holding rib (3), is of relatively rigid construction and carries the claw (5) and a fastening screw (7).

6. Device according to claim 2,
**characterised in that**
the fastening element (4) has an upwardly projecting resilient rib (9) on its side opposite the hook-shaped projection (8), and the holding rib (3) can be snapped in between the hook-shaped projection (8) and the resilient rib (9).

7. Device according to claim 1, **characterised in that** the fastening element (4) can be displaced along the holding rib (3).

## Revendications

1. Dispositif de fixation d'une partie encastrable (2) constitutive d'une cuisine, notamment un évier, dans l'ouverture d'encastrement (1b) d'un panneau de support (1), comprenant une pièce de fixation (4) et une barrette de retenue (3) fixée à la partie encastrable, dispositif dans lequel la partie encastrable (2) repose, par son pourtour extérieur, sur la face supérieure du panneau ou sur un gradin encaissé dudit panneau, et pénètre dans l'ouverture d'encastrement (1b) par la barrette de retenue (3) saillant vers le bas ; et dans lequel la pièce de fixation (4) peut être emboîtée par en bas sur la barrette de retenue (3), est destinée à être encliquetée sur une surface d'appui (3a) sensiblement horizontale de la barrette de retenue, et provoque la fixation de la partie encastrable (2), dans le panneau (1), au moyen d'une griffe (5) qui coiffe la face inférieure dudit panneau et peut être serrée par rapport à cette dernière, **caractérisé par le fait que** la barrette de retenue (3) est sensiblement coudée en U en partie basse, et présente la surface d'appui (3a) à son extrémité coudée, **par le fait que** la pièce de fixation (4) présente une fente (10) ouverte vers le haut, qui peut être enfilée sur le coude en forme de U de la barrette de retenue, et **par le fait que** la pièce de fixation (4) ceinture, de part et d'autre, le coude sensiblement configuré en U, de telle sorte que les parties latérales de la fente 10 prennent appui sur les deux côtés extérieurs du coude en forme de U, et provoquent une fixation stable, et **par le fait que** la pièce de fixation est réalisée au moins sur l'un des côtés du coude en forme de U élastiquement souple.

2. Dispositif selon la revendication 1, **caractérisé par le fait que** la pièce de fixation (4) comporte une saillie (8) de forme crochue sur son côté venant en prise avec la barrette de retenue (3).

3. Dispositif selon la revendication 2, **caractérisé par le fait que** la saillie (8) de forme crochue emprisonne par-derrière la surface d'appui précitée (3a).

4. Dispositif selon la revendication 2, **caractérisé par le fait que** la saillie (8) de forme crochue s'écarte de la barrette de retenue (3) à son extrémité supérieure.

5. Dispositif selon la revendication 1, **caractérisé par le fait que** l'élément de fixation (4) est de réalisation relativement rigide sur son côté venant en prise avec la barrette de retenue (3), et porte la griffe (5), ainsi qu'une vis de fixation (7).

6. Dispositif selon la revendication 2, **caractérisé par le fait que** l'élément de fixation (4) comporte, sur son côté situé en vis-à-vis de la saillie (8) de forme crochue, une membrane élastique (9) dépassant vers le haut, et la barrette de retenue (3) peut être encliquetée entre ladite saillie (8) de forme crochue et ladite membrure élastique (9).

7. Dispositif selon la revendication 1, **caractérisé par le fait que** l'élément de fixation (4) peut coulisser le long de la barrette de retenue (3).
